(19) Europäisches Patentamt
European Patent Office
Office européen des brevets

(11) Publication number: **0 118 162**
**A1**

(12) # EUROPEAN PATENT APPLICATION

(21) Application number: 84200526.6

(22) Date of filing: 05.02.81

(51) Int. Cl.[3]: **B 01 J 23/40**
B 01 J 23/32, B 01 J 37/02

(30) Priority: 13.02.80 US 121190

(43) Date of publication of application:
12.09.84 Bulletin 84/37

(84) Designated Contracting States:
BE DE FR GB IT NL

(60) Publication number of the earlier application in accordance with Art. 76 EPC: 0 036 703

(71) Applicant: MOBIL OIL CORPORATION
150 East 42nd Street
New York New York 10017(US)

(72) Inventor: Kresge, Charles Theodore
140 Shire Drive
Sewell New Jersey 08080(US)

(72) Inventor: Chester, Arthur Warren
517 Country Club Drive
Cherry Hill New Jersey 08003(US)

(74) Representative: West, Alan Harry
Mobil Court 3 Clements Inn
London WC2A 2EB(GB)

(54) **Preparation of metal containing catalysts.**

(57) A method of preparing supported unimetallic catalysts of improved activity having uniform metals distribution involves saturating the catalyst support with carbon dioxide prior to impregnation with the desired metal. Unimetallic catalysts embraced by the invention comprise a metal selected from ruthenium, rhodium, palladium, osmium, iridium, manganese, technetium and rhenium.



Croydon Printing Company Ltd

# PREPARATION OF METAL CONTAINING CATALYSTS

This invention relates to a process for preparing metal containing catalysts, particularly supported unimetallic catalysts comprising a metal selected from ruthenium, rhodium, palladium, osmium, iridium, manganese, technetium, and rhenium.

The present invention provides a process for preparing unimetallic catalyst composites comprising a metal selected from ruthenium, rhodium, palladium, osmium, iridium, manganese, technetium and rhenium on a support, which comprises contacting the support with gaseous carbon dioxide in an amount and for a period of time sufficient to substantially saturate the support with carbon dioxide, thereafter impregnating the support with the desired metal and calcining the resulting composite.

Platinum containing catalysts are widely employed in the petroleum and chemical industries. Perhaps the greatest utility for such catalysts is in the reforming of petroleum naphtha to form high octane gasoline.

The art of manufacturing platinum reforming catalysts is highly developed and numerous methods and procedures have been described for the manufacture of such catalysts.

A substantial problem in the preparation of platinum-alumina catalysts, especially catalyst compositions prepared by the impregnation of solid particulate or formed alumina particles, is the achievement of uniform distribution of the platinum within the alumina structure. It has long been recognized that uniform distribution of platinum is important to the efficient utilization of this costly catalytic promoter. Thus, such distribution is important to expose as great an area of platinum surface as possible, to make full use of the alumina support and to protect the platinum against loss by attrition.

Typical of the prior patent literature concerned with procedures for achieving uniform distribution of platinum in platinum-alumina reforming catalyst are U.S. Patent Nos. 2,840,514; 2,840,532 and 2,884,382.

The first two of the above-identified patents are concerned with the addition of various salts as impregnating aids to a platinum-containing solution to assist in obtaining more uniform impregnation. Typical of such impregnating aids are various aluminum salts such as aluminum chloride and aluminum nitrate. The invention therein disclosed and claimed in the latter patent comprises pretreating a porous alumina support material, while in the dry state, with gaseous carbon dioxide in such a manner that all of the air in the pores of alumina is replaced by the gaseous carbon dioxide. Thereafter, the carbon dioxide-pretreated alumina is impregnated with a platinum solution and the resulting material dried and calcined.

U.S. Patent No. 3,518,207 describes an impregnation process for platinum-alumina catalysts which comprises contacting alumina with a carbon dioxide saturated platinum impregnating solution.

The use of carbon dioxide presaturation has not previously been disclosed in conjunction with the preparation of supported unimetallic catalysts comprising a metal selected from ruthenium, rhodium, palladium, osmium, iridium, manganese, technetium and rhenium.

It has now been discovered that supported unimetallic catalysts comprising a metal selected from ruthenium, rhodium, palladium, osmium, iridium, manganese, technetium and rhenium exhibiting improved activity and uniform metal distribution throughout the refractory support can be obtained by pretreating the support with gaseous carbon dioxide before impregnation of the support with the desired metal.

The refractory support used in the present invention is a porous adsorptive material having a surface area exceeding 20 square meters per gram and preferably, greater than 100 square meters per gram. Refractory inorganic oxides are preferred supports, particularly alumina or mixtures thereof with silica. Alumina is particularly preferred and may be used in a large variety of forms including alumina precipitate or gel, alumina monohydrate and sintered alumina. Various forms of alumina, either singly or in combination, such as eta, chi, gamma, theta, delta or alpha alumina may be suitably employed as the alumina support. Preferably, the alumina is gamma alumina and/or eta alumina. The above nomenclature used in the present specification and claims with reference to alumina phase designation is that generally employed in the United States and described in The Aluminum Industry: Aluminum and its Production by Edwards, Frary and Jeffries, published by McGraw-Hill (1930). The refractory support, desirably alumina has a preferred particle size of at least 0.01 µm and generally not exceeding 3000 µm. The alumina may be employed in massive form but generally will be in the form of a powder or in particle form, either irregularly shaped or uniformly shaped, such as beads, cubes, tablets and extruded pellets. In the preparation of spheroidal alumina gel particles, an alumina hydrosol is prepared by intimate admixture of suitable reactants and the hydrosol is introduced in the form of globules to a water-immiscible medium, the depth and temperature of which is controlled so that the hydrosol globules set to spheroidal particles of hydrogel during passage through the medium. The resulting hydrogel particles are thereafter withdrawn from the forming zone and conducted to suitable washing, drying and/or calcining equipment. Alumina, in the form of a precipitate, may be prepared by adding a suitable reagent such as ammonium

hydroxide or ammonium carbonate to an aluminum salt such as aluminum chloride, aluminum nitrate or aluminum acetate in an amount sufficient to form aluminum hydroxide which, upon drying, is converted to alumina. After the alumina has been formed, it is generally washed to remove soluble impurities. Washing procedures ordinarily involve washing with water, either in combination with filtration or as separate operations. It has been found that filtration of the alumina is improved when the wash water contains a small amount of ammonium hydroxide. The extent of washing will depend to some extent on the nature of the reactants initially employed in preparation of the alumina precipitate.

Halogen may be added to the support, preferably alumina, in a form which will readily react therewith in order to obtain the desired results. One feasible method of adding the halogen is in the form of an acid such as hydrogen fluoride, hydrogen bromide, hydrogen chloride and/or hydrogen iodide. Other suitable sources of halogen include volatile salts such as ammonium fluoride and ammonium chloride. When such salts are used, the ammonium ions will be removed during subsequent heating of the catalyst. Halogen may also be added as fluorine, chlorine, bromine or iodine or by treatment in gaseous hydrogen halide. The halogen, preferably chlorine or fluorine, may be incorporated into the catalyst at any suitable stage in the catalyst manufacture. Thus, halogen may be added before, after or during incorporation of the metal. It is preferred to introduce halogen during impregnation with the metal or metals after the alumina has undergone carbon dioxide treatment. One method to accomplish this is to use halogen-containing metal compounds such as chloroiridic acid. Additional amounts of halogen may be incorporated in the catalyst by contacting it with materials such as hydrogen fluoride and hydrogen chloride, either prior to or subsequent to the metal impregnation step. Halogen may also be incorporated by contacting the catalyst with a gaseous stream

containing the halogen such as chlorine or hydrogen chloride. One feasible way to halogenate the alumina is by the addition of an alkyl halide such as tertiary butyl chloride during the reforming operation. The amount of halogen introduced into the support is such that the halogen content of the overall catalyst is from 0.1 to 5 weight percent.

It is an essential feature of the present invention that the alumina base be pretreated with gaseous carbon dioxide prior to impregnation with a solution containing the desired metal. The alumina base, either with or without halogen, is dried, preferably to a water content of less than 30 percent by weight. It is particularly preferred that the alumina base, after drying, be calcined before contact thereof with gaseous carbon dioxide. The dried and/or calcined alumina is thereafter treated with gaseous carbon dioxide. Such treatment is generally effected under room temperature conditions utilizing a carbon dioxide pressure in the range of 100 kPa to 450 kPa. The alumina is generally treated with carbon dioxide for a period of from one minute to 48 hours and more usually from one minute to 3 hours. It is to be noted that the time of gas treatment and the pressures set forth above are not considered critical, it being only necessary that the alumina base be exposed to a gaseous carbon dioxide atmosphere for a sufficient period of time and under sufficient pressure to become substantially saturated. The gas initially contained in the pores of the alumina base, which will ordinarily be air, may be replaced by sweeping the alumina particles with gaseous carbon dioxide for a sufficient period of time to replace substantially all of the air in the pores of the alumina with carbon dioxide. It is generally preferred, however, to subject the porous alumina base to a vacuum, thereby removing the air or other gas contained therein and subsequently to contact the evacuated particles with gaseous carbon dioxide. The alumina, after treatment with carbon dioxide, is thereafter impregnated with a solution of a suitable compound(s) of the desired

metal. In one preferred embodiment of the invention, the alumina, after pretreatment, is maintained in an atmosphere of gaseous carbon dioxide during the subsequent impregnation. Desirably, the alumina which has undergone pretreatment with gaseous carbon dioxide should be brought into contact with the impregnating solution containing compound(s) of the desired metal immediately after such pretreatment to insure the optimum results of this invention.

A particularly effective method of impregnating the carbon dioxide-treated alumina support comprises the use of an aqueous solution of metal-containing acids such as chloroiridic acid and perrhenic acid ($HReO_4$).

The resulting composite of alumina and the metal with the combined halogen is dried at a temperature of from 93°C to 260°C for a period of time of from 0.5 hours to 24 hours or longer and thereafter the composite is calcined in the presence of an oxygen containing gas, e.g. air, at a temperature of from 427°C to 538°C for a period of time of from 0.5 hour to 12 hours or more. In some instances, depending on the metal, the calcination may occur in nitrogen in lieu of air. In addition to calcination, the composite may be exposed in a hydrogen atmosphere to reduce a substantial portion of the metal components to the elemental state. Such reduction is generally conducted at temperatures not in excess of 538°C.

Typically the amount of the metal component is from 0.05 weight percent to 5.0 weight percent, the remaining weight of the catalyst being support material with some halogen content.

The preparation of catalysts according to this invention results in enhancement in catalytic activity. Without wishing to be bound by any particular theory of operability, it is believed that this enhancement in activity is due to improved metal distribution throughout the support particle. It is further believed that the better metal distribution through the support alleviates problems resulting from diffusion. It is felt that the high metal dispersion

allows intimate contact between hydrocarbon molecules and more active catalytic (metal) sites. Incomplete coke burning in the core of the catalyst, a problem in catalysts prepared without carbon dioxide treatment, does not occur, again it is believed, because of the high metal distribution throughout the particle.

In a particular embodiment of the process of this invention, alumina beads are pretreated with gaseous carbon dioxide; then, while the beads are mixed by continuous rotation, the beads are impregnated with an aqueous solution of a compound or compounds (or complex or complexes) containing the desired metal followed by drying and calcination. Post impregnation carbon dioxide treatment may be utilized as a precaution.

Whereas the prior art U.S. Patent Nos. 2,884,382 and 3,518,207 teach that carbon dioxide treatment of alumina supports during the impregnation with only platinum promotes a uniform platinum distribution throughout the support, it would not follow that other metals would behave in a similar manner. The following will demonstrate that no prediction can be made on the outcome of the interaction of $ReO_4^-$ with $Al_2O_3$ solely on the basis of the nature of platinum chemistry.

The impregnation of $Al_2O_3$ beads with platinum or rhenium can be accomplished using aqueous solutions of $H_2PtCl_6$ and $HReO_4$. Both acids are completely dissociated in water (F.A. Cotton and G. Wilkinson, Advanced Inorganic Chemistry, John Wiley and Son, N.Y., 1972, p. 1040; R.D. Peacock, The Chemistry of Technetium and Rhenium, Elsevier Publishing Co., London, 1966, p. 32).

$$H_2PtCl_6 + 2H_2O \rightleftharpoons 2H_3O^+ + PtCl_6^{2-}$$

$$HReO4 + H_2O \rightleftharpoons H_3O^+ + ReO_4^-$$

Any discussion of the differences in the chemistry of impregnation by these metals must be based on differences between the anions.

The platinum anion, hexachloroplatinate, $PtCl_6 2-$, is an octahedral di-anion with platinum in the +4 ($d^6$) oxidation state. The rhenium anion, perrhenate, $ReO_4-$, is a tetrahedral mono-anion with rhenium in the +7 ($d^0$) oxidation state (F.A. Cotton and G. Wilkinson, Advanced Inorganic Chemistry, John Wiley and Son, N.Y. 1972, p. 973, 1031).

The anions of interest show quite different redox potentials as given by W.M. Latimer and J.H. Hildebrand, Reference Book of Inorganic Chemistry, 3rd ed., Macmillian Co., N.Y. 1959, p. 395, 443, 450.

| | | | | | Volts |
|---|---|---|---|---|---|
| $Re^0$ | -0.25 → | $ReO_2$ | -0.51 → | $ReO_4-$ | -0.76 |
| $Pt^0$ | -0.73 → | $PtCl_4 2-$ | -0.72 → | $PtCl_6 2-$ | -1.45 |
| $Ir^0$ | -1.0 → | $IrCl_6 3-$ | -1.02 → | $IrCl_6 2-$ | -2.02 |

The anion structural and charge differences as well as differences in the platinum and rhenium oxidation states lead to differences in their chemistry as illustrated by the solubilities of the salts in water (J.A. Dean, editor, Lange's Handbook of Chemistry, 12 ed., McGraw-Hill Book Co., N.Y., 1979, p. 4-22 and R.D. Peacock, The Chemistry of Technetium and Rhenium, Elsevier Publishing Co., London, 1966, p. 33). For example, $(NH_4)_2PtCl_6$ has a solubility, at 20°C. of 0.5 g/100 g $H_2O$ while $NH_4ReO_4$ has a solubility, at 20°C. of 6.2 g/100 g $H_2O$. The ammonium salt of $ReO_4-$ is much more soluble than $(NH_4)_2PtCl_6$. The corresponding ammonium salt of $IrCl_6 2-$ has a solubility, at 19°C. of 15.4 g/100 g. of $H_2O$. (W.F. Lincke, Solubilities of Inorganic and Metal-Organic Compounds, 4th ed., D. Van Nostrand Co., Inc., N.Y. 1958, p. 1304).

Due to the differences in the anion charge, structure, metal oxidation state and chemistry, no predictions about $ReO_4-$ and $Al_2O_3$ interactions can be made based solely on the chemistry

of platinum. The similarities in structure, charge and metal of the anions, $PtCl_6 2-$ and $IrCl_6 2-$, indicate that the Ir anion would be quite similar to the platinum anion in its interaction with $Al_2O_3$ (Cotton and Wilkinson, loc.cit.; p. 1018).

The catalyst prepared according to the process of the present invention is particularly useful in the reforming of hydrocarbons. Charge stocks conventionally employed in reforming operations are contemplated for use with the catalysts described herein. These stocks include virgin naphtha, cracked naphtha, gasoline, including FCC gasoline, or mixtures thereof boiling within the approximate range of from 21°C to 260°C and, preferably within the range of from 49°C to 232°C. The charge stock is contacted in the vapor phase with the catalyst at a liquid hourly space velocity of from 0.1 to 10 and preferably from 0.5 to 4. Reaction temperature is within the approximate range of from 371°C to 593°C and preferably, from 427°C to 538°C. Hydrogen may be added to the reaction zone at a rate corresponding to a mole ratio of hydrogen to hydrocarbon charge of from 0.5 to 20 and preferably from 2 to 12. Reaction pressure is maintained from 450 kPa to 7000 kPa, preferably from 795 kPa to 4935 kPa. Since the reforming process produces large quantities of hydrogen, at least a portion thereof may be conveniently employed for the introduction of hydrogen with the feed.

It is contemplated that the catalyst prepared according to the process of the present invention may be employed in any of the conventional types of processing equipment. Thus, the catalyst may be used in the form of pills, pellets, extrudates, spheres, granules, broken fragments or various other shapes dispersed as a fixed bed within a reaction zone. The charge stock may be passed through the catalyst bed as a liquid, vapor or mixed phase in either upward or downward flow. The catalyst may also be used in a form suitable for moving beds. In such instance, the charge stock and catalyst are contacted in a reforming zone wherein the charge stock

may be passed in concurrent or countercurrent flow to the catalyst. Alternatively, a suspensoid-type process may be employed in which the catalyst is slurried in the charge stock and the resulting mixture conveyed to the reaction zone. The reforming process is generally carried out in a series of several reactors. Usually, three to five reactors are used. The catalyst may be employed in just one of the reactors, e.g., the first reactor or in several reactors or in all reactors. After reaction, the product from any of the above processes is separated from the catalyst by known techniques and conducted to distillation columns where the various desired components are obtained by fractionation.

Copending application 81300483.5 (published as EP-A2-0 036 703) describes and claims the preparation of bimetallic catalyst composites and the preparation of catalysts by mixing bimetallic catalyst composites prepared by such a process and the trimetallic catalyst composites prepared by the process of this invention.

The following examples illustrate the present invention.

The supports used in the following examples were commercially obtained spheroidal 1.6 mm gamma alumina beads. Typical analytical properties of these beads are given in Table 1. In general, the supports were humidified before each preparation by storing over water in a closed vessel for at least four hours. This humidification step can be combined with the carbon dioxide pretreatment step if so desired. The humidification step is not essential to achieve the beneficial results afforded by the present invention. The use of humidification, however, depends on the state of hydration of the support.

TABLE 1

TYPICAL ANALYTICAL PROPERTIES OF $\gamma$-$Al_2O_3$ BEADS

| | |
|---|---|
| Density, Real, g/cc | 2.94 |
| Particle, g/cc | 0.76 |
| Pore volume, cc/g | 0.97 |
| Surface Area, $m^2/g$ | 195 |
| percent $SiO_2$ | 0.35 |
| percent Na | 0.02 |
| percent Cl | 0.04 |
| Crystallinity (order-disorder) | intermediate |

EXAMPLE 1

A double cone blender was filled with 250 g of humidified, gamma $Al_2O_3$ beads. The blender was attached to a rotary evaporator and was evacuated and backfilled with $CO_2$. The blender was then rotated and, under a partial vacuum, the beads were impregnated with 225 ml of an aqueous solution of $H_2IrCl_6 \cdot 6H_2O$ containing an equivalent of 1.5 g of metallic iridium. The method of impregnation was the same as that described in Example 2. The impregnated beads were held under a $CO_2$ atmosphere for one hour and then dried for 18 hours in a forced air draft oven at 121°C. The iridium containing beads were calcined for one hour at 371°C in nitrogen. The resulting composite contained 0.6 weight percent iridium on alumina.

EXAMPLE 2

In this example, a composite is prepared without carbon dioxide presaturation and containing 0.6 weight percent iridium on alumina.

10 g of humidified gamma $Al_2O_3$ beads were impregnated with 9 ml of an aqueous solution of $H_2IrCl_6 \cdot 6H_2O$ containing an equivalent of 0.06 g of metallic iridium. The impregnated beads were dried at 121°C in air for 18 hours and then calcined for one hour at 371°C in nitrogen.

The catalysts prepared according to the procedures of Examples 1 and 2 underwent a catalyst dehydrogenation/dehydrocyclization screening test using n-hexane and cyclohexane as charge stocks. The conditions for such screening tests were as follows:

Test Conditions: 0.5 g catalyst
$H_2$ Reduction at 454°C

Dehydrogenation: Charge Stock Cyclohexane

WHSV = 3 $Hr^{-1}$
$H_2$/HC = 7
Temp. = 300°C
Time = 10 minutes

Dehydrocyclization: Charge Stock n-hexane

WHSV = 3 $hr^{-1}$
$H_2$/HC = 7
Temp = 470°C
Time = 60 minutes

The screening test was conducted by first reducing the catalyst sample with hydrogen at 454°C. After such reduction, cyclohexane was passed over the catalyst sample at the above-stated conditions for 10 minutes. After this 10 minutes contact, the sample was flushed with sufficient hydrogen to raise the temperature from 300°C to 470°C and then n-hexane was passed over the catalyst sample at the above stated conditions for 60 minutes.

The results of these screening tests are given in Table 2. Such results allow for comparisons to be made between catalysts based on catalytic activity. The catalyst prepared by the described technique using $CO_2$ shows an enhanced activity with respect to both dehydrogenation and dehydrocyclization when compared to the catalyst prepared without $CO_2$.

TABLE 2

| Catalyst of Example | 1 | 2 |
|---|---|---|
| $CO_2$ presaturation | yes | no |
| Weight percent Ir | 0.6 | 0.6 |
| Conversion of Cyclohexane (Dehydrogenation) | 68.5 | 68.3 |
| Conversion of n-Hexane (Dehydrocyclization | 61.6 | 45.5 |

CLAIMS:

1. A process for preparing unimetallic catalyst composites comprising a metal selected from ruthenium, rhodium, palladium, osmium, iridium, manganese, technetium and rhenium on a support, which comprises contacting the support with gaseous carbon dioxide in an amount and for a period of time sufficient to substantially saturate the support with carbon dioxide, thereafter impregnating the support with the desired metal and calcining the resulting composite.

2. A process according to claim 1, wherein the metal in the resulting composite is present in an amount of from 0.05 to 5.0 weight percent based on total catalyst weight.

3. A process according to claim 1 or claim 2, wherein the support is alumina.

4. A process according to claim 3, wherein the support is gamma alumina.

5. A process according to claim 3 or claim 4, wherein the alumina has a surface area exceeding 20 $m^2/g$.

6. A process according to claim 5, wherein the alumina has a surface area exceeding 100 $m^2/g$.

7. A process according to any one of claims 1 to 6, wherein the support is contacted with carbon dioxide at room temperature, at a pressure of from 100 to 450 kPa.

8. A process according to any one of claims 1 to 7, wherein the support is contacted with carbon dioxide for a period of time from one minute to 48 hours.

9. A process according to claim 8, wherein the period of time is from one minute to three hours.

10. A process according to any one of claims 1 to 9, wherein the catalyst further comprises halogen.

11. A process according to claim 10, wherein the amount of the halogen present is from 0.1 to 5 weight percent based on total catalyst weight.

12. A process according to claim 10 or claim 11, wherein the halogen is chlorine.

13. A process according to any one of claims 1 to 12, wherein the calcination is conducted at a temperature of from 427°C to 538°C.

14. A process according to any one of claims 1 to 13, wherein the composite is further subjected to carbon dioxide treatment after impregnation, but prior to calcination.

15. A process according to any one of claims 1 to 14, wherein subsequent to the calcination, the composite is reduced in a hydrogen atmosphere at a temperature not in excess of 538°C.

European Patent Office

# EUROPEAN SEARCH REPORT

0118162

Application number

EP 84 20 0526

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | FR-A-2 097 918 (TEXACO)<br>* Page 2, line 15 - page 4, line 27; claims 1-9 *<br>--- | 1-15 | B 01 J 23/40<br>B 01 J 23/32<br>B 01 J 37/02 |
| Y | GB-A-1 528 209 (BP)<br>* Page 1, lines 12-29; page 2, lines 4-15; claims 1-12 *<br>--- | 1-3 | |
| D,Y | US-A-2 884 382 (OLECK)<br>* Column 2, lines 24-57; column 3, line 4 - column 6, line 25; claims 1-9 *<br>--- | 1,3,5-15 | |
| A | FR-A-2 301 500 (H. KOLBEL)<br>* Page 1, lines 20-30, page 3, line 32 - page 5, line 23; claim 1 *<br>--- | 1 | TECHNICAL FIELDS SEARCHED (Int. Cl. 3) |
| A | FR-A-2 286 187 (SOC. F. PRODUITS POUR CATALYSE)<br>--- | | B 01 J |
| D,A | US-A-3 518 207 (R.W. HAGY)<br>--- | | |
| D,A | US-A-2 840 514 (H.M. BRENNAN)<br>----- | | |

The present search report has been drawn up for all claims

| Place of search | Date of completion of the search | Examiner |
|---|---|---|
| THE HAGUE | 01-06-1984 | LO CONTE C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82